# FASCICULE DE BREVET EUROPEEN

(11) **EP 1 781 155 B1**
(45) Date de publication et mention de la délivrance du brevet: **05.03.2008**
(21) Numéro de dépôt: 05775239.6
(22) Date de dépôt: 08.06.2005
(51) Int. Cl.: A47J 37/12

(54) **APPAREIL DE CUISSON AVEC MOYEN DE STOCKAGE DE MATIERE GRASSE ET MOYEN DE STOCKAGE DE MATIERE GRASSE POUR UN TEL APPAREIL**
GARVORRICHTUNG MIT EINEM MITTEL ZUR FETTAUFBEWAHRUNG UND FETTAUFBEWAHRUNGSMITTEL FÜR DIE VORRICHTUNG
COOKING DEVICE WITH A MEANS FOR STORING FAT AND MEANS FOR STORING FAT FOR SAID DEVICE

(30) Priorité: 08.06.2004 FR 0406220
(43) Date de publication de la demande: 09.05.2007
(73) Titulaire: SEB S.A., 69132 Ecully Cedex (FR)
(72) Inventeur: BIZARD, Jean-Claude, F-21121 Fontaine-les-Dijon (FR); PAYEN, Jean-Marc, F-21800 Quétigny (FR)
(74) Mandataire: Martin, Didier Roland Valéry
(86) Numéro de dépôt international: PCT/FR2005/001417
(87) Numéro de publication internationale: WO 2006/000701

(56) Documents cités:
- EP-A- 1 382 262
- CH-A- 691 425
- US-A- 2 078 641
- US-A- 4 050 447
- PATENT ABSTRACTS OF JAPAN vol. 0175, no. 23 (C-1113), 21 septembre 1993 (1993-09-21) & JP 05 146363 A (STAR SHOKUHIN KOGYO KK), 15 juin 1993 (1993-06-15)

## Description

### DOMAINE TECHNIQUE

La présente invention se rapporte au domaine technique général des appareils de chauffe ou de cuisson d'aliments, notamment à usage domestique, et en particulier des appareils de cuisson d'aliments en présence de matière grasse, du genre friteuse.

La présente invention concerne un appareil domestique de cuisson d'aliments en présence de matière grasse, comprenant d'une part un corps principal au sein duquel est monté un moyen de réception conçu pour accueillir en son sein les aliments à cuire et d'autre part un moyen de chauffe principal conçu pour cuire lesdits aliments.

La présente invention concerne également un moyen de stockage de matière grasse pour un appareil de cuisson.

### TECHNIQUE ANTERIEURE

La cuisson d'aliments en présence de matière grasse est bien connue. Elle permet de créer des conditions favorables à la survenance de la réaction de Maillard, réaction conduisant à la production de substances aromatiques et colorées contribuant à conférer aux aliments des propriétés organoleptiques améliorées.

Il existe sur le marché de nombreux appareils permettant un mode de cuisson favorable à la formation de réactions de Maillard, ces ustensiles pouvant être très simples (poêles, sauteuses) ou plus élaborés (friteuses électriques telles que celle décrite dans le document FR-2 829 010).

L'ensemble de ces appareils présente cependant l'inconvénient de ne pas permettre à l'utilisateur de maîtriser de façon précise les quantités de matière grasse utilisée pour la cuisson, ce qui conduit généralement, à l'issue du processus de cuisson, à l'obtention d'aliments très riches en matière grasse. Ainsi, des aliments cuits dans les conditions précitées sont considérés comme présentant généralement un goût agréable, mais n'étant pas recommandables du point de vue de la santé, car trop imprégnés de graisse.

En outre, la conception de ces appareils connus génère des risques de brûlures ou salissures.

En effet, le fonctionnement de ces appareils de l'art antérieur conduit l'utilisateur à se trouver au voisinage direct de la matière grasse brûlante, par exemple lorsqu'il place les aliments dans l'appareil après avoir fait chauffer la matière grasse, ou lorsqu'il réalimente l'appareil en matière grasse, si les conditions de cuisson le nécessitent.

### EXPOSE DE L'INVENTION

L'objet assigné à l'invention vise en conséquence à porter remède aux différents inconvénients énumérés précédemment et à proposer un nouvel appareil de cuisson qui permet à l'utilisateur de contrôler de façon précise la quantité et la qualité de la matière grasse utilisée pour la cuisson, tout en étant particulièrement sûr, et d'entretien facile.

Un autre objet de l'invention vise à proposer un nouvel appareil de cuisson de conception simple et compacte.

Un autre objet de l'invention vise à proposer un nouvel appareil de cuisson qui permet une cuisson homogène des aliments.

Un autre objet de l'invention vise à proposer un nouvel appareil de cuisson de conception particulièrement robuste et fiable.

Un autre objet de l'invention vise à proposer un nouvel appareil de cuisson respectueux de l'intégrité des aliments.

Un autre objet de l'invention vise à proposer un nouvel appareil de cuisson qui permet une cuisson particulièrement rapide, ainsi que l'obtention d'un goût et d'une coloration des aliments cuits particulièrement attrayants.

Un autre objet de l'invention vise à proposer un nouvel appareil de cuisson qui procure un résultat de cuisson optimal des aliments même lorsque ces derniers présentent des dimensions très différentes entre eux.

Un autre objet de l'invention vise à proposer un nouvel appareil de cuisson très simple d'utilisation.

Un autre objet de l'invention vise à proposer un nouvel appareil de cuisson qui soit économe en consommation d'énergie tout en permettant d'obtenir des produits cuits présentant d'excellents aspect et texture.

Un autre objet de l'invention vise à proposer un nouvel appareil de cuisson dont l'alimentation en matière grasse est réalisée de façon particulièrement simple et fiable.

Un autre objet de l'invention vise à proposer un nouvel appareil de cuisson dont l'utilisation et la mise en oeuvre ne nécessite qu'un minimum d'interventions de la part de l'utilisateur.

Un autre objet de l'invention vise à proposer un nouvel appareil de cuisson dont l'alimentation en matière grasse peut être réalisée de façon particulièrement précise.

Un autre objet de l'invention vise à proposer un nouvel appareil de cuisson d'utilisation particulièrement commode et pratique.

Les objets assignés à l'invention sont atteints à l'aide d'un appareil domestique de cuisson d'aliments en présence de matière grasse, comprenant d'une part un corps principal au sein duquel est monté un moyen de réception conçu pour accueillir en son sein les aliments à cuire et d'autre part un moyen de chauffe principal conçu pour cuire lesdits aliments, caractérisé en ce qu'il comporte, monté solidaire dudit corps principal, un moyen de stockage de matière grasse, distinct du moyen de réception et relié fonctionnellement à ce dernier pour pouvoir transférer dans le moyen de réception une quantité prédéterminée de matière grasse pour enduire les aliments de matière grasse en vue de réaliser une cuisson sèche desdits aliments, le moyen de réception étant conçu et agencé pour contenir à la fois les aliments et sensiblement l'ensemble de la matière grasse susceptible de provenir du moyen de stockage.

Les objets assignés à l'invention sont également atteints à l'aide d'un moyen de stockage de matière grasse pour un appareil de cuisson conforme à l'invention.

### DESCRIPTIF SOMMAIRE DES DESSINS

D'autres objets et avantages de l'invention apparaîtront plus en détails à l'aide de la description qui suit, en référence aux dessins annexés donnés à titre d'exemples illustratifs et non limitatifs dans lesquels :
- La figure 1 illustre, selon une vue générale en perspective, un appareil de cuisson conforme à l'invention, formé en l'occurrence par une friteuse.
- La figure 2 illustre, selon une vue latérale en coupe médiane, l'appareil de cuisson représenté à la figure 1.
- La figure 3 illustre, selon une vue de côté, un moyen de stockage de matière grasse pour l'appareil des figures 1 et 2.

### MEILLEURE MANIERE DE REALISER L'INVENTION

Dans les exemples de réalisation illustrés aux figures, l'appareil de cuisson conforme à l'invention est constitué par une friteuse destinée à et conçue pour la réalisation de friture d'aliments de toute sorte avec de la matière grasse telle que de l'huile. Au sens de l'invention, il conviendra néanmoins d'entendre que le terme « *appareil de cuisson d'aliments* » recouvre l'ensemble des appareils de cuisson d'aliments susceptibles d'assurer la cuisson des aliments avec de la matière grasse, l'application à des appareils de friture n'étant qu'une application préférentielle. L'invention peut en effet bien évidemment également s'appliquer à d'autres appareils tels que des cuiseurs polyvalents, dès l'instant où ces appareils mettent en oeuvre une cuisson en présence de matière grasse (rissolage, rôtissage, etc.).

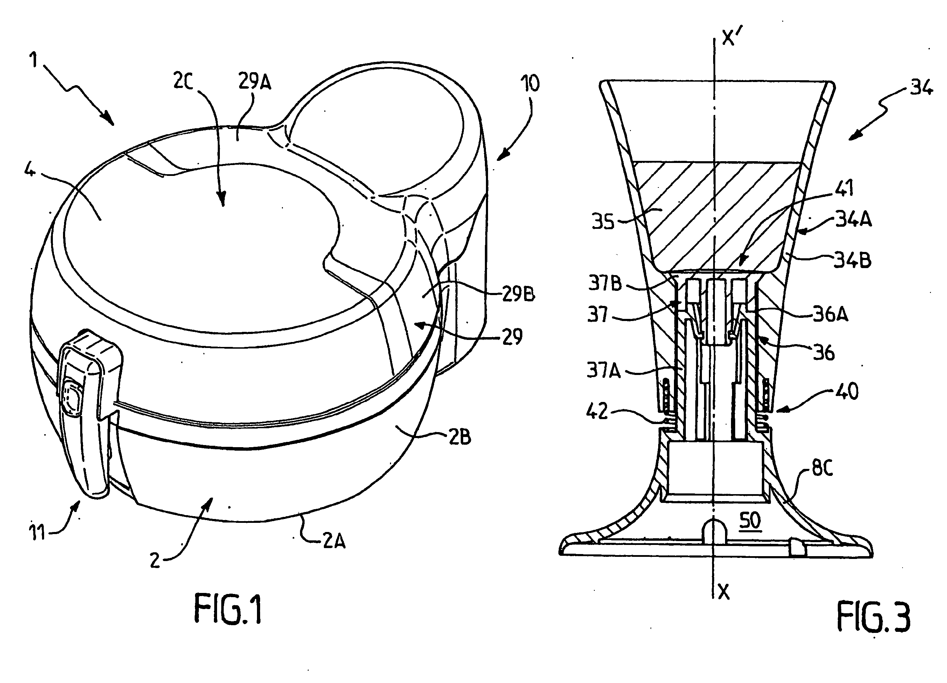

La friteuse 1 illustrée aux figures 1 à 3 est une friteuse électrique conçue et dimensionnée pour un usage domestique. L'appareil 1 conforme à l'invention est donc préférentiellement un appareil 1 domestique de cuisson. L'invention n'est cependant pas limitée au cadre familial, et pourra concerner également les friteuses semi-professionnelles ou professionnelles.

La friteuse domestique 1 illustrée aux figures est préférentiellement conçue et dimensionnée pour frire des aliments particulaires, tels que des morceaux de pommes de terre, en vue d'obtenir des frites. Ces morceaux de pommes de terre pourront avoir été coupés manuellement par l'utilisateur, ou avoir été achetés déjà préparés dans le commerce, à l'état frais ou surgelé. La friteuse 1 conforme à l'invention n'est cependant pas limitée à l'élaboration de pommes de terre frites, et peut être utilisée pour faire frire d'autres sortes d'aliments (viandes, poissons, légumes...) sans pour autant que l'on sorte du cadre de l'invention.

La friteuse conforme à l'invention est de préférence une friteuse à cuisson sèche. Par « *cuisson sèche* », on désigne ici un mode de cuisson d'aliments sans immersion de ces derniers dans un bain d'huile ou de matière grasse, que cette immersion soit partielle et/ou temporaire pendant le cycle de cuisson. L'expression « *cuisson sèche* » désigne au contraire une cuisson dans laquelle les aliments sont certes « *mouillés* » par un médium de cuisson (huile par exemple), mais sans pour autant être plongés ou baigner dans ledit médium. En cela, le principe de fonctionnement d'une telle friteuse diffère de celui d'une friteuse classique à bain d'huile.

La friteuse 1 conforme à l'invention comprend, de façon classique, un corps principal 2 au sein duquel est monté un moyen de réception 5 conçu pour accueillir en son sein des aliments à cuire.

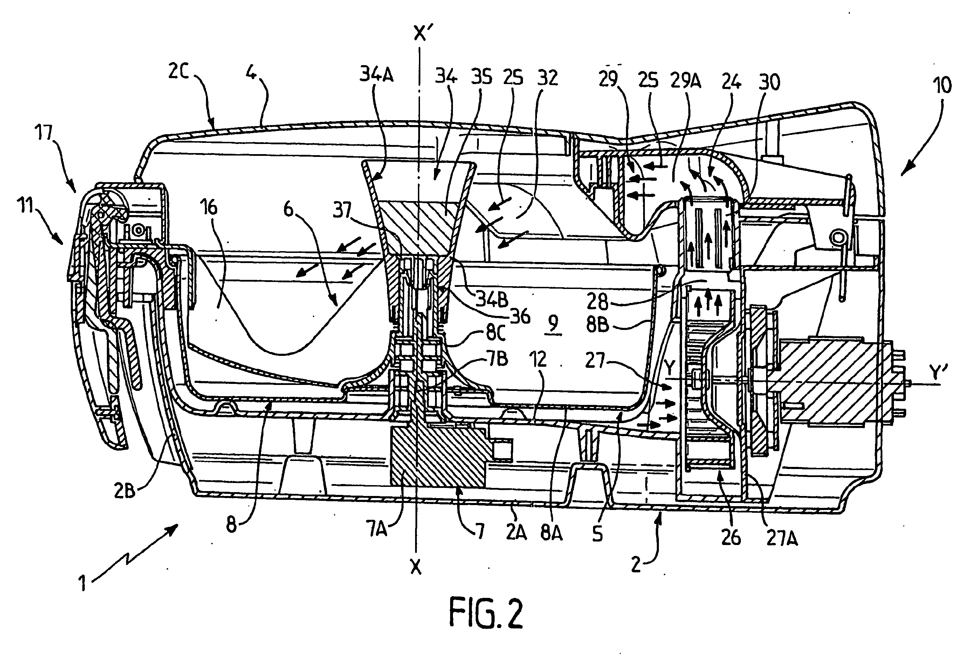

Tel que cela est représenté aux figures 1 et 2, le corps principal 2 comprend une embase 2A, destinée à former le socle de la friteuse 1, et conformée pour reposer de façon stable sur un plan ou un support.

A partir de l'embase 2A et à la périphérie de cette dernière s'élève une jupe latérale 2B, réalisée par exemple en un matériau métallique ou en un matériau plastique, et formant l'enveloppe externe de la friteuse 1. La jupe latérale 2B peut présenter toutes formes géométriques appropriées et esthétiques. Par exemple, dans le cas de la friteuse représentée à la figure 1, la jupe 2B présente, en vue de dessus, une forme globalement en « *8* », le sommet du « *8* » définissant l'arrière 10 de la friteuse 1, tandis que la base du « *8* » définit l'avant 11 de ladite friteuse 1.

Avantageusement, le corps principal 2 est muni d'un couvercle 2C monté mobile entre d'une part une position de fermeture (représentée à la figure 1), dans laquelle le couvercle 2C forme avec le corps principal 2 une enceinte sensiblement fermée, et d'autre part une position d'ouverture (non représentée), autorisant l'introduction des aliments à cuire (en l'occurrence : à frire) au sein du corps principal 2. En d'autres termes, le couvercle 2C forme, en coopération avec la jupe 2B et l'embase 2A, un boîtier clos, c'est-à-dire de préférence sensiblement hermétique, autorisant une cuisson en atmosphère fermée. La fermeture sensiblement étanche du corps principal 2 par le couvercle 2C peut être réalisée par exemple par l'intermédiaire de joints d'étanchéité (non représentés aux figures).

Avantageusement, et tel que cela est représenté à la figure 1, le couvercle 2C pourra être pourvu d'une zone transparente de vision 4 permettant de surveiller l'évolution de la friture à l'intérieur de l'appareil pendant le cycle de cuisson, lorsque le couvercle 2C est fermé sur le corps principal 2.

Conformément à l'invention, la friteuse 1 comprend également un moyen de chauffe principal 24 conçu pour cuire les aliments présents dans le moyen de réception 5 au sein du corps principal 2.

Par « *moyen de chauffe principal* », on désigne un moyen de chauffe qui assure à lui seul au moins l'essentiel de l'apport thermique permettant la cuisson. De façon préférentielle, le moyen de chauffe principal 24 est conçu et agencé pour assurer la totalité dudit apport thermique.

Le moyen de chauffe principal 24 peut être de tout type connu de l'homme du métier, et notamment être conçu pour générer un flux chauffant orienté de façon à frapper sensiblement directement au moins une partie des aliments présents dans le moyen de réception 5, ainsi que cela sera décrit en détails ultérieurement.

De manière avantageuse, le moyen de chauffe principal 24 est intégré à la friteuse 1, c'est-à-dire qu'il est monté au sein du corps principal 2. Il est cependant tout à fait envisageable, sans pour autant sortir du cadre de l'invention, que le moyen de chauffe principal soit externe, c'est-à-dire indépendant de la friteuse 1 et extérieur à cette dernière.

Selon une caractéristique importante de l'invention, la friteuse 1 comporte, monté solidaire du corps principal 2, un moyen de stockage 34 de matière grasse 35.

Dans ce qui suit, on fera référence à de la matière grasse 35 se présentant sensiblement sous forme liquide lorsqu'elle est stockée au sein du moyen de stockage 34. Il est cependant tout à fait envisageable que la matière grasse 35 se présente sous la forme d'un solide plus ou moins mou. Le moyen de stockage 34 sera ainsi de préférence adapté à la nature physicochimique de la matière grasse 35 qu'il est destiné à contenir, et pourra être à ce titre muni de moyens de modification de la viscosité de la matière grasse 35, constitués par exemple, de moyens chauffants secondaires, permettant de fluidifier la matière grasse 35. Lesdits moyens chauffants secondaires peuvent être distincts du moyen de chauffe principal 24 ou être constitués par ce dernier. Dans ce dernier cas, une partie de l'énergie thermique produite par le moyen de chauffage 24 sera donc utilisée pour fluidifier, si nécessaire, la matière grasse 35 contenue dans le moyen de stockage 34.

Conformément à l'invention, le moyen de stockage 34 de matière grasse 35 est distinct du moyen de réception 5. En d'autres termes, le moyen de stockage 34 permet de contenir de la matière grasse 35 au sein du corps principal 2 mais de façon séparée et isolée de la zone où s'effectue la cuisson, à savoir le moyen de réception 5. Le moyen de réception 5 et le moyen de stockage 34 définissent donc préférentiellement des volumes d'accueil distincts et séparés. L'invention permet donc l'accueil de matière grasse, au sein de l'appareil 1, en dehors de la zone de cuisson proprement dite.

Conformément à l'invention, le moyen de stockage 34 est relié fonctionnellement au moyen de réception 5 pour pouvoir alimenter ledit moyen de réception 5 en matière grasse 35. Selon cette disposition technique, la matière grasse destinée à être en contact avec les aliments à cuire, en vue notamment de favoriser la survenance de la réaction de Maillard, suit un trajet, de préférence à sens unique, en deux temps. Cette matière grasse 35 est ainsi tout d'abord stockée dans le moyen de stockage 34, puis, de façon automatique ou du moins sur commande de l'utilisateur, est transférée dans le moyen de réception 5, avec les aliments à cuire, de sorte que ces derniers seront cuits en présence de matière grasse.

Le moyen de stockage 34 de matière grasse 35 est relié fonctionnellement au moyen de réception 5 pour pouvoir transférer dans le moyen de réception 5 une quantité prédéterminée de matière grasse pour enduire les aliments de matière grasse en vue de réaliser une cuisson sèche des aliments.

En d'autres termes, le moyen de stockage 34 est conçu pour introduire, au sein du moyen de réception 5, une dose de matière grasse 35 dont la quantité correspond sensiblement à celle nécessaire à l'enduction des aliments.

Le moyen de stockage 34 de matière grasse 35 est ainsi préférentiellement conçu pour transférer une quantité de matière grasse 35 sensiblement suffisante pour recouvrir d'une pellicule de matière grasse les aliments.

Cette quantité prédéterminée dépend bien évidemment de la nature de la quantité des aliments, ainsi que de la nature de la matière grasse 35 utilisée, et en particulier de sa viscosité.

De façon avantageuse, le moyen de stockage 34 est relié fonctionnellement au moyen de réception 5 pour pouvoir alimenter ledit moyen de réception 5 en matière grasse 35 par mise en mouvement de la matière grasse 35 du moyen de stockage 34 vers et dans le moyen de réception 5.

De façon préférentielle, la liaison fonctionnelle entre le moyen de stockage 34 et le moyen de réception 5 est à sens unique du moyen de stockage vers le moyen de réception. En d'autres termes, la matière grasse n'est pas recyclée du moyen de réception 5 vers le moyen de stockage 34.

Le moyen de stockage 34 permet ainsi, à un instant donné, de positionner au sein du moyen de réception 5 une quantité prédéterminée de matière grasse, quantité correspondant préférentiellement à celle nécessaire et suffisante pour une cuisson sèche, et ce sans intervention manuelle directe de l'utilisateur, qui n'a pas lui-même à alimenter directement le moyen de réception 5 en matière grasse.

Conformément à l'invention, le moyen de réception 5 est conçu et agencé pour contenir à la fois les aliments et sensiblement l'ensemble de la matière grasse 35 susceptible de provenir du moyen de stockage 34.

Ainsi, le moyen de réception 5 présente une double fonction, puisque :
- il est capable de conserver en son sein de la matière grasse 35, et en particulier de la matière grasse se trouvant à l'état fluide, telle que de l'huile, par exemple; le moyen de réception 5 est donc avantageusement sensiblement étanche aux matières liquides ou semi-liquides (huile ou graisse fondue par exemple) ;
- il forme un réceptacle pour l'ensemble de la matière grasse transférée à partir du moyen de stockage 34, c'est-à-dire que cette matière grasse, originellement stockée dans le moyen de stockage 34, se retrouvera sensiblement intégralement au sein du moyen de réception 5, le transfert de matière grasse 35 hors du moyen de stockage 34 vers une zone située en dehors du moyen de réception 5 étant exclu ; le moyen de réception 5 est ainsi le réceptacle exclusif de la matière grasse 35 provenant du moyen de stockage 34.

Avantageusement, le moyen de réception 5 comporte un récipient 8 comprenant un fond de récipient 8A, à partir duquel s'élèvent des parois latérales de récipient 8B, 8C, de manière à délimiter sensiblement un volume interne 9 destiné à accueillir les aliments à cuire et la matière grasse de cuisson. A cette fin, lesdits fonds 8A et parois latérales 8B, 8C sont sensiblement pleins, c'est-à-dire non ajourés, du moins dans la zone d'interface avec les aliments et la matière grasse, afin d'éviter toute fuite de cette dernière hors du récipient 8.

De manière préférentielle, le fond de récipient 8A est sensiblement plan et lisse, et présente une forme générale de couronne plate, à partir de la périphérie interne et externe de laquelle s'élèvent en vis-à-vis respectivement une paroi latérale externe 8B et une paroi latérale interne 8C, de telle sorte que le récipient 8 présente sensiblement une forme de canal annulaire, de symétrie de révolution d'axe vertical X-X'. En d'autres termes, le récipient 8 présente ainsi globalement une forme toroïdale générée par la rotation autour de l'axe de symétrie X-X' d'un profil ouvert sensiblement en forme de « *U* ».

Avantageusement, le moyen de stockage 34 comprend un réservoir 34A pourvu d'un orifice de déversement 36, lequel orifice est lui-même muni d'un moyen d'obturation 37. Le moyen de stockage 34 est susceptible de se trouver d'une part dans une configuration de rappel et de fermeture (représenté aux figures 2 et 3), dans laquelle la matière grasse 35 est maintenue par le moyen d'obturation 37 au sein du réservoir 34A, et d'autre part dans une configuration d'ouverture, dans laquelle le moyen d'obturation 37 autorise le transfert de la matière grasse 35 par l'orifice de déversement 36 hors du réservoir 34A vers le moyen de réception 5, formé en l'occurrence par le récipient 8.

Plus particulièrement, l'alimentation du moyen de réception 5 s'effectue ici en matière grasse à l'état fluide, ladite matière grasse s'écoulant sous l'effet de la gravité par l'orifice de déversement 36 lorsque ce dernier est libéré de l'action de fermeture du moyen d'obturation 37.

Il est cependant tout à fait envisageable, sans pour autant sortir du cadre de l'invention, que le transfert de matière grasse s'effectue non pas par simple écoulement à travers un orifice, mais par projection sous pression, ou vaporisation (aérosol).

Avantageusement, le moyen d'obturation 37 est monté fixe en position relativement au corps principal 2 tandis que le réservoir 34A est monté mobile relativement au moyen d'obturation 37, entre une première position, dite position haute, correspondant à la configuration de rappel et de fermeture du moyen de stockage 34, et une deuxième position, dite position basse, correspondant à la configuration d'ouverture du moyen de stockage 34.

De façon préférentielle, le réservoir 34A comprend un gobelet 34B muni à sa base d'une bouche 36A, formée par exemple par un évidement cylindrique traversant ménagé dans la partie inférieure du gobelet, et s'étendant selon la direction axiale X-X' entre une extrémité inférieure 40 et une extrémité supérieure 41. Ladite bouche 36A forme ainsi l'orifice de déversement 36.

Quant au moyen d'obturation 37, il comprend de préférence un pointeau 37A, se présentant sous la forme d'une tige agencée pour être inséré à coulissement dans la bouche 36A, ladite tige étant pourvue à l'une de ses extrémités d'une tête divergente 37B, de forme générale tronconique, destinée à coopérer avec l'extrémité supérieure 41 de la bouche 36A.

De façon préférentielle, le pointeau 37A à tête divergente 37B est monté solidaire du moyen de réception 5, formé en l'occurrence par le récipient 8. Plus particulièrement, le pointeau 37A présente à sa base une forme évasée, qui une fois rapportée sur le fond de récipient 8A forme par elle-même la paroi latérale interne 8C du récipient 8.

Le gobelet 34B est monté à coulissement élastique, par exemple à l'encontre d'un ressort de compression 42, relativement au pointeau 37A, entre :
- d'une part une position haute correspondant à la configuration de rappel et de fermeture, dans laquelle la tête divergente 37B est en contact avec la bouche 36A, et plus particulièrement avec l'extrémité supérieure 41 de cette bouche pour fermer ladite bouche ;
- et d'autre part une position basse, dans laquelle la tête divergente 37B, est à distance de la bouche 36A et plus particulièrement de l'extrémité 41, autorisant ainsi le passage de la matière grasse 35 par la bouche 36A hors du gobelet 34B.

Les dimensions respectives, en section transversale, du pointeau 37A et de la bouche 36A seront choisies pour permettre un jeu entre ces pièces, de façon à créer un orifice annulaire, en forme de couronne, délimité par le pointeau 37A et la bouche 36A. Cette ouverture en forme de couronne autour du pointeau favorise un écoulement multidirectionnel de la matière grasse 35 sur ou au niveau de la paroi latérale interne 8C du récipient 8.

Avantageusement, le couvercle 2C est relié fonctionnellement au moyen de stockage 34 pour que la position de fermeture du couvercle 2C corresponde sensiblement à la configuration d'ouverture du moyen de stockage 34.

Ainsi, dans l'exemple de réalisation représenté à la figure 2, le couvercle 2C est agencé pour exercer, lorsqu'il se trouve en position de fermeture, une poussée vers le bas selon la direction X-X' sur le réservoir 34A, de façon à faire passer ce dernier de sa position haute à sa position basse provoquant ainsi un mouvement relatif du pointeau 37A et du gobelet 34B, engendrant l'écoulement de la matière grasse 35.

Grâce à cette disposition technique, l'alimentation du récipient 8 se fait automatiquement au sein d'une enceinte fermée, protégeant ainsi l'environnement extérieur et donc l'utilisateur d'éventuelles projections notamment.

Avantageusement, le moyen de stockage 34 comporte un moyen de dosage de matière grasse 35. Ce moyen de dosage peut être constitué par la capacité volumique même du moyen de stockage 34, qui peut être prédéterminée et correspondre strictement à une certaine quantité et/ou nature d'aliments.

Ce moyen de dosage peut être également constitué d'un système de repérage sensoriel, comprenant par exemple des graduations tactiles ou visuelles disposées sur le corps du moyen de stockage 34, et permettant à l'utilisateur de connaître le volume de matière grasse 35 contenu dans le moyen de stockage 34, et de contrôler le volume de matière grasse transféré vers le moyen de réception 5.

Ainsi, le moyen de dosage permet à l'utilisateur de contrôler précisément la quantité d'huile qu'il introduit dans la zone de cuisson de la friteuse, ce qui permet une économie en matière grasse tout en favorisant une cuisine plus saine.

Avantageusement, le moyen de stockage 34 est monté sur le moyen de réception, lequel peut être monté amovible relativement au corps principal 2.

Avantageusement, le moyen de stockage 34 est lui-même monté de manière amovible relativement au corps principal 2.

Dans le cas où le moyen de stockage 34 est monté solidaire du moyen de réception 5, le caractère amovible du moyen de stockage 34 peut provenir du caractère amovible du moyen de réception 5. En effet, l'extraction du moyen de réception 5 hors du corps principal 2 entraînera simultanément l'extraction du moyen de stockage 34, puisque ce dernier est monté sur le moyen de réception 5.

Il est cependant également envisageable que le moyen de stockage 34 forme une unité indépendante qui soit montée de manière amovible relativement au reste de l'appareil et notamment relativement au récipient 8 ou à tout autre élément, tel que le corps principal 2.

Cette mesure technique permet une utilisation particulièrement pratique de la friteuse pour l'utilisateur, qui peut ainsi manipuler aisément le moyen de stockage 34 en vu de son remplissage par de l'huile par exemple.

Cette mesure technique permet également une interchangeabilité du moyen de stockage. Il est ainsi envisageable que l'utilisateur dispose de différents moyens de stockage 34, se distinguant par exemple par leurs capacités volumiques. L'utilisateur peut ainsi choisir, selon la quantité et/ou la qualité des aliments qu'il souhaite cuire, un moyen de stockage 34 adapté.

Avantageusement, le moyen de stockage 34 est conçu pour un usage unique exclusivement, et peut présenter éventuellement un caractère jetable. Dans ce cas, l'utilisateur, peut se procurer un moyen de stockage dans le commerce puis le connecter sur son appareil. L'utilisateur peut ainsi bénéficier d'huiles ou de mélanges d'huiles particuliers, éventuellement aromatisés et/ou particulièrement adaptés à tel ou tel aliment.

Avantageusement, la friteuse 1 conforme à l'invention comprend un moyen de remuage 6 des aliments contenus dans le moyen de réception 5.

Avantageusement, la friteuse 1 comporte, monté au sein du corps principal 2, un moyen pour enduire automatiquement les aliments à frire d'une pellicule de matière grasse.

En d'autres termes, contrairement aux friteuses classiques de l'art antérieur, dans lesquelles les aliments sont immergés dans un bain d'huile, l'invention repose sur le principe d'une friture réalisée en recouvrant simplement la surface des aliments d'une mince couche d'huile ou de toute autre matière grasse alimentaire appropriée. Ainsi, la cuisson ne se fait pas dans un bain d'huile, lequel implique la présence d'une quantité importante de matière grasse entourant les aliments, mais bien grâce à une faible quantité d'huile formant un mince revêtement sensiblement homogène à la surface de chacun des aliments placés au sein du moyen de réception 5.

Ainsi que cela a été précisé précédemment, l'enduction de matière grasse est réalisée de manière automatique, c'est-à-dire sans nécessité d'une contribution essentielle et directe de l'utilisateur pour l'établissement de la pellicule de graisse à la surface des aliments. En d'autres termes, grâce à la présence, au sein du corps principal 2, d'un moyen pour enduire automatiquement les aliments d'une pellicule de matière grasse, l'utilisateur n'a qu'à se contenter d'introduire les aliments dans la friteuse 1, au sein du corps principal 2, puis d'activer la mise en oeuvre du moyen d'enduction automatique (dans la mesure où cette activation n'est pas elle-même automatique) pour que la friteuse 1 se charge elle-même directement, au sein du corps principal 2, d'enduire individuellement les aliments d'une fine couche de matière grasse, sans que l'utilisateur ne soit contraint de réaliser lui-même cette opération de façon manuelle.

Avantageusement, le moyen pour enduire automatiquement les aliments d'une pellicule de matière grasse comprend d'une part le moyen de réception 5, et d'autre part le moyen de remuage 6.

Avantageusement, le moyen de réception 5 et le moyen de remuage 6 sont conçus pour être mis en mouvement l'un par rapport à l'autre, de façon à brasser et remuer les aliments et la matière grasse, afin de recouvrir sensiblement chaque aliment d'une pellicule sensiblement uniforme, homogène et continue de matière grasse.

Avantageusement, le moyen de remuage 6 est monté immobile en position relativement au corps principal 2, tandis que le moyen de réception 5 est d'une part monté à rotation relativement au corps principal 2 et au moyen de remuage 6, et d'autre part relié fonctionnellement à un moyen moteur 7 pour être entraîné en rotation par ce dernier.

Un tel principe de montage correspond à celui mis en oeuvre sur la friteuse 1 illustrée aux figures, et qui fera l'objet de la description qui suit. Il est néanmoins tout à fait envisageable, sans pour autant sortir du cadre de l'invention, que la friteuse 1 mette en oeuvre un moyen de remuage monté mobile relativement au corps principal et au moyen de réception, le moyen de réception pouvant être monté mobile ou immobile en position au sein du corps principal. En particulier, l'appareil 1 conforme à l'invention pourra comporter un moyen de remuage 6 qui est d'une part monté mobile à rotation relativement au moyen de réception 5, et d'autre part relié fonctionnellement à un moyen moteur 7 pour être entraîné en rotation par ce dernier.

L'entraînement en rotation du récipient 8 de la friteuse 1 illustrée aux figures est effectué à l'aide d'un premier moteur électrique 7A formant moyen moteur 7, ledit premier moteur électrique 7A étant pourvu d'un arbre de sortie 7B s'étendant de façon sensiblement coaxiale à l'axe X-X', et solidarisé à la paroi latérale interne 8C. Plus précisément, l'arbre de sortie 7B est enchâssé, de préférence de façon amovible, dans le manchon 50 formé par la paroi latérale interne 8C.

De manière préférentielle, le moyen de remuage 6 comprend une pale 16 disposée au sein du volume interne 9 délimité par le récipient 8, de façon à former un obstacle sensiblement immobile à l'encontre des aliments mis en mouvement par la rotation du récipient 8. Ainsi, une fois les aliments et la matière grasse disposés (manuellement et/ou automatiquement) dans le récipient 8, ce dernier est mis en rotation à l'aide du premier moteur électrique 7A, ce qui entraîne un déplacement globalement circulaire des aliments et de la matière grasse autour de l'axe X-X', jusqu'à ce que les aliments rencontrent l'obstacle formé en l'occurrence par la pale 16, obstacle qui contribue à retourner et brasser les aliments et la matière grasse, réalisant ainsi l'enduction rapide et sensiblement uniforme desdits aliments.

Avantageusement, la pale 16 est également montée de façon amovible sur le corps principal 2.

A cette fin, dans le cadre non limitatif de la variante de réalisation représentée aux figures, la pale 16 est solidaire (de façon amovible ou non) d'une poignée 17, de sorte que la pale 16 et la poignée 17 forment un sous-ensemble unitaire et indépendant qui peut être monté de façon amovible sur le corps principal 2.

Avantageusement, la friteuse 1 comporte, monté sur le corps principal 2, un moyen de chauffe principal 24 conçu pour générer un flux chauffant 25, lequel est orienté de façon à frapper sensiblement directement au moins une partie des aliments au sein du corps principal 2.

Par flux chauffant, on désigne ici un faisceau thermique directionnel présentant un caractère dynamique contrôlé de façon positive, au contraire par exemple d'un simple effet de convection naturelle pouvant être obtenu par un chauffage purement statique.

Du fait que le flux chauffant 25 est dirigé pour venir s'exercer directement, sans médium intermédiaire, sur les aliments présents dans le récipient 8, cela contribue à un excellent échange thermique, et procure, en coopération avec la pellicule d'huile présente sur les aliments, une cuisson sensiblement équivalente à celle obtenue en bain d'huile mais sans les inconvénients de cette dernière.

Avantageusement, le flux chauffant 25 est un flux d'air chaud. L'invention n'est cependant pas limitée à un flux d'air chaud, et on pourrait envisager que le flux chauffant soit issu d'un chauffage à infra-rouges par exemple. Un chauffage à air chaud est toutefois préféré, du moins dans le mode spécifique de réalisation représenté aux figures, car il donne de meilleurs résultats qu'un chauffage à infra-rouges, notamment dans le cas d'aliments découpés manuellement et présentant des morceaux de taille et d'épaisseur diverses.

Avantageusement, le flux d'air chauffant 25 est dirigé sensiblement vers la pale 16. En effet, par sa fonction d'obstacle, la pale 16 va contribuer à maintenir agglutinée dans son voisinage la majeure partie, voire la totalité des aliments présents dans le plat 8. Dès lors, il suffit d'orienter le flux d'air chauffant 25 vers la pale 16 pour chauffer de manière optimale les aliments, sans qu'il soit nécessaire d'exercer un chauffage uniforme sur l'ensemble du récipient 8. La combinaison d'une pale 16 et d'un flux d'air chaud 25 localisé s'avère donc particulièrement avantageuse en terme d'efficacité de cuisson, d'économie d'énergie et de simplicité de conception.

Avantageusement, le flux d'air chaud 25 est un flux recyclé, c'est-à-dire que la friteuse 1 travaille en ambiance sensiblement fermée, de l'air présent à l'intérieur du corps principal 2 étant prélevé pour être chauffé, puis propulsé sur les aliments. Cet air chaud propulsé se refroidit au contact des aliments, puis est à nouveau prélevé pour être réchauffé et ainsi de suite.

De manière avantageuse, le moyen de chauffe principal 24 comprend un ventilateur centrifuge 26 générant un flux aéraulique en aspirant de l'air au sein du corps principal 2 par au moins une ouïe d'entrée 27, ménagée de préférence latéralement relativement au récipient 8, et en refoulant cet air par au moins une ouïe de sortie 28 dans un dispositif de canalisation 29, lequel débouche en direction et au-dessus des aliments présents dans le corps principal 2.

Avantageusement, le moyen de chauffe principal 24 comprend un élément calorifique 30, par exemple de nature résistive positionné au sein du flux aéraulique, de préférence à l'aval de l'ouïe de sortie 28 dans le sens du flux, de façon à transformer le flux aéraulique en flux chauffant 25.

Avantageusement, le dispositif de canalisation 29 comprend deux conduits 29A, 29B s'étendant en forme de Y à la périphérie de la friteuse 1 et prenant naissance, de façon commune, sensiblement au niveau de l'élément calorifique 30 ou à l'aval de ce dernier, dans le sens du flux.

De manière préférentielle, les conduits 29A, 29B sont montés dans le couvercle 2C et se terminent chacun, dans le sens du flux 25, par une tuyère 32 orientée de façon oblique relativement à l'axe X-X', vers l'avant 11 et le bas de la friteuse 1. Dans cette configuration, le flux d'air chauffant 25 comprend ainsi deux veines distinctes qui convergent, de façon sensiblement symétrique, vers la pale 16. Ces deux veines convergeant de manière opposée contribuent à un excellent échange thermique avec les aliments, car elles génèrent, à leur point de rencontre, des turbulences favorisant la transmission de chaleur. Il est cependant bien entendu que l'invention n'est pas limitée à un nombre particulier de veines de fluide, et qu'il est tout à fait envisageable que le flux d'air chauffant 25 comprenne une seule veine ou plus de deux veines.

Afin d'améliorer encore les qualités de cuisson de la friteuse 1 conforme à l'invention, il est intéressant de pourvoir la face interne du récipient 8, destinée à être en regard des aliments, d'un revêtement à base d'un matériau constitué majoritairement de silicone. En particulier, il est intéressant de recouvrir le fond 8A du récipient 8 d'un revêtement de silicone, car le silicone, grâce à ses propriétés de microporosité, présente des qualités spécifiques de réaction avec la matière grasse (émulsion) qui permettent d'obtenir une meilleure répartition de l'huile sur les aliments tout en conservant un excellent coefficient de frottement, ce qui s'avère utile pour la préservation de l'intégrité des aliments lors de l'enduction par brassage.

En outre, un tel plat siliconé a la faculté de chauffer les frites qui sont à son contact, sans les brûler ou les surcolorer comme le ferait un plat métallique par exemple. La demanderesse a ainsi constaté que les propriétés de transfert par conduction entre des frites et un plat siliconé sont sensiblement comparable aux propriétés de transfert par convection forcée de l'air chaud sur les frites. Grâce à une telle enduction de silicone, l'uniformité de cuisson est assurée en évitant en particulier tout brunissage des pointes de frites.

Il est également envisageable que tout ou partie de la face interne du récipient 8 soit revêtue d'un matériau constitué majoritairement de polytétrafluoroéthylène (PTFE), matériau qui présente d'excellente propriétés thermiques et tribologiques.

Avantageusement, la friteuse 1 conforme à l'invention forme, en fonctionnement (c'est-à-dire lorsque le couvercle 2C est fermé), une enceinte de cuisson sensiblement close, c'est-à-dire de préférence fermée de façon étanche, ladite enceinte étant de préférence munie d'un moyen de fuite calibrée de vapeur vers l'extérieur (non représenté).

Cette mesure technique permet de contrôler l'hygrométrie régnant au sein de l'enceinte. A cette fin, le moyen de fuite calibrée de vapeur est dimensionné de façon à :
- éviter une cuisson à l'étouffée, qui aurait lieu si l'enceinte était complètement étanche et qui pourrait provoquer une casse des frites,
- favoriser une consommation économe en énergie, car si l'échappement de vapeur est trop important, cela conduit à une dissipation d'énergie elle aussi importante, qui nécessite de surdimensionner l'élément calorifique 30.

De façon préférentielle, le moyen de fuite calibrée de vapeur comprend un orifice de fuite (non représenté), disposé de préférence au voisinage de l'ouïe d'entrée 27 du ventilateur 26, ce qui permet une évacuation contrôlée en continu de la vapeur tout au long du cycle de cuisson, ainsi qu'un renouvellement contrôlé de l'air à l'intérieur de l'enceinte.

Avantageusement, l'appareil conforme à l'invention peut comporter un orifice permettant le remplissage du moyen de stockage 34 lorsque le couvercle 2C ferme le corps principal 2. Cet orifice d'appoint, qui peut être prolongé d'un conduit, est par exemple ménagé dans le couvercle 2C, ou plus généralement dans le corps principal 2. Cette disposition technique permet de rajouter de la matière grasse alors que la cuisson a commencé, par exemple à la suite d'un oubli, ou pour obtenir des frites un peu plus dorées.

On va maintenant décrire un exemple d'utilisation de la friteuse 1 conforme à l'invention. Dans cet exemple, l'utilisateur se propose de frire 1 Kg de morceaux de pommes de terre fraîches coupées manuellement.

Pour cela, l'utilisateur introduit lesdits morceaux de pommes de terre dans le plat 8. L'utilisateur introduit également une faible quantité d'huile (par exemple 30 grammes ou moins) dans le gobelet 34B.

Dans le cas où le moyen de stockage 34 est amovible, l'utilisateur peut effectuer ce remplissage de façon séparée, sans manipuler l'ensemble de l'appareil.

Dans le cas où le moyen de stockage 34 est amovible et à usage unique, l'utilisateur n'aura qu'à connecter le moyen de stockage 34, acheté au préalable dans le commerce par exemple, sur la friteuse. Dans cette configuration, la friteuse dispose de moyens d'accostage qui lui permettent de réceptionner le moyen de stockage 34 et d'établir une communication fluidique entre le contenu du moyen de stockage 34 et le moyen de réception 5.

Du fait de la faible quantité d'huile mise en jeu, l'utilisateur peut utiliser une huile d'excellente qualité. Le moyen de stockage 34 est d'ailleurs de manière préférentielle dimensionné pour pouvoir contenir au maximum une quantité de matière grasse sensiblement nécessaire et suffisante pour enduire les aliments contenus par le moyen de réception 5.

L'utilisateur referme ensuite le couvercle 2C, ce qui à pour effet de presser le gobelet 34B vers le bas, parallèlement à l'axe X-X', provoquant ainsi la vidange de l'huile 35 contenue dans le gobelet vers et dans le récipient 8. Cette vidange s'effectue idéalement dans toutes les directions, le long ou au niveau de la paroi latérale interne 8C, ce qui contribue à favoriser une enduction rapide des aliments.

Le moyen de stockage 34 permet ainsi, préalablement à la cuisson proprement dite, un déversement d'huile nouvelle « *froide* », c'est-à-dire non chauffée, ou du moins pas à une température suffisante pour assimiler cette huile à un moyen de chauffe.

Cette huile est déversée de préférence à pression atmosphérique, sans mise en pression ni vaporisation afin d'éviter notamment les éclaboussures au sein de l'appareil.

Le cycle de cuisson démarre alors, ce qui engendre la rotation du récipient 8 autour de l'axe X-X' et donc le brassage à l'aide de la pale fixe 16 des morceaux de pommes de terre et de l'huile répandus dans le plat. Ce brassage conduit à l'établissement d'une pellicule d'huile à la surface de chaque morceau de pomme de terre. Simultanément, ou éventuellement après un temps de latence, le ventilateur 26 et l'élément calorifique 30 sont mis en route, ce qui conduit à l'établissement d'un flux d'air chaud 25 qui vient chauffer directement les morceaux de pommes de terre enduits d'huile. Le récipient 8 fait donc office également de récipient de cuisson.

Dans une première phase du cycle de cuisson, l'air pulsé chauffe les morceaux de pommes de terre de la couche supérieure, lesquels produisent rapidement de la vapeur d'eau. Cette vapeur d'eau, en se condensant sur les morceaux, plus froids, des couches inférieures, fait ainsi office d'échangeur de température avec lesdits morceaux des couches inférieures. Ce mécanisme de cuisson dans une ambiance saturée en vapeur permet ainsi un chauffage rapide et homogène de l'ensemble des morceaux de pommes de terre présents dans le récipient 8. Ce chauffage homogène est facilité par le brassage permanent des morceaux opéré par le récipient 8 rotatif et la pale 16. Il se crée ainsi, dans cette première phase du cycle, un équilibre entre évaporation et recondensation, jusqu'à ce que la vapeur d'eau ait été progressivement évacuée hors de la friteuse par le moyen de fuite calibrée.

Commence alors une deuxième phase de cuisson, lorsque le taux de vapeur a été sensiblement réduit. Durant cette deuxième phase, la température moyenne dans l'enceinte atteint sensiblement 160°C (alors qu'elle était d'environ 100-120°C au cours de la première phase) et la réaction de Maillard (coloration des frites) a lieu. Durant cette deuxième phase, le brassage des morceaux est poursuivi sensiblement continûment à l'aide de la pale 16 et de la rotation du plat 8, afin d'homogénéiser la cuisson.

Le cycle de cuisson étant terminé, l'utilisateur peut alors ouvrir le couvercle 2C et extraire simultanément le récipient 8 et la pale 16 à l'aide de la poignée amovible 17. Le récipient 8, sur lequel est monté le moyen de stockage 34, fait alors office de plat de service, et contient désormais des frites prêtes à servir dont le goût et l'aspect sont similaires aux frites fraîches cuites dans un bain d'huile.

### POSSIBILITE D'APPLICATION INDUSTRIELLE

L'invention trouve son application industrielle dans la conception, la fabrication et l'utilisation d'un appareil de cuisson d'aliments.

## Revendications

1. - Appareil (1) domestique de cuisson d'aliments en présence de matière grasse, comprenant d'une part un corps principal (2) au sein duquel est monté un moyen de réception (5) conçu pour accueillir en son sein les aliments à cuire et d'autre part un moyen de chauffe principal (24) conçu pour cuire lesdits aliments, **caractérisé en ce qu'**il comporte, monté solidaire dudit corps principal (2), un moyen de stockage (34) de matière grasse (35), distinct du moyen de réception (5) et relié fonctionnellement à ce dernier pour pouvoir transférer dans le moyen de réception (5) une quantité prédéterminée de matière grasse pour enduire les aliments de matière grasse en vue de réaliser une cuisson sèche desdits aliments, le moyen de réception (5) étant conçu et agencé pour contenir à la fois les aliments et sensiblement l'ensemble de la matière grasse (35) susceptible de provenir du moyen de stockage (34).

2. - Appareil (1) selon la revendication 1 **caractérisé en ce que** le moyen de réception (5) comporte un récipient (8) comprenant un fond de récipient, à partir duquel s'élèvent des parois latérales (8B, 8C) de récipient de manière à délimiter un volume interne (9) destiné à accueillir les aliments à cuire et la matière grasse (35), lesdits fond (8A) et parois latérales (8B, 8C) étant sensiblement pleins.

3. - Appareil (1) selon l'une des revendications 1 et 2 **caractérisé en ce qu'**il comprend un moyen de remuage (6) des aliments contenus dans le moyen de réception (5).

4. - Appareil (1) selon la revendication 3 **caractérisé en ce que** le moyen de réception (5) et le moyen de remuage (6) sont conçus pour être mis en mouvement l'un par rapport à l'autre, de façon à remuer les aliments.

5. - Appareil (1) selon la revendication 4 **caractérisé en ce que** le moyen de remuage (6) est d'une part monté mobile à rotation relativement au moyen de réception (5), et d'autre part relié fonctionnellement à un moyen moteur (7) pour être entraîné en rotation par ce dernier.

6. - Appareil (1) selon l'une des revendications 1 à 5 **caractérisé en ce que** le moyen de chauffe principal (24) est conçu pour générer un flux chauffant (25) orienté de façon à frapper sensiblement directement au moins une partie des aliments.

7. - Appareil (1) selon la revendication 6 **caractérisé en ce que** le flux chauffant (25) est un flux d'air chaud.

8. - Appareil (1) selon l'une des revendications 1 à 7 **caractérisé en ce que** le moyen de chauffe principal (24) est monté au sein du corps principal (2).

9. - Appareil (1) selon l'une des revendications 1 à 8 **caractérisé en ce qu'**il forme, en fonctionnement, une enceinte de cuisson sensiblement close munie d'un moyen de fuite calibrée de vapeur vers l'extérieur.

10. -Appareil (1) selon l'une des revendications 1 à 9 **caractérisé en ce que** le moyen de stockage (34) comprend un réservoir (34A) pourvu d'un orifice de déversement (36), lequel est lui-même muni d'un moyen d'obturation (37), ledit moyen de stockage (34) étant susceptible de se trouver d'une part dans une configuration de rappel et de fermeture, dans laquelle la matière grasse (35) est maintenue par le moyen d'obturation (37) au sein du réservoir (34A), et d'autre part dans une configuration d'ouverture, dans laquelle le moyen d'obturation (37) autorise le transfert de la matière grasse (35), par l'orifice de déversement (36), hors du réservoir (34A) vers le moyen de réception (5).

11. -Appareil (1) selon la revendication 10 **caractérisé en ce que** le moyen d'obturation (37) est monté fixe en position relativement au corps principal (2), tandis que le réservoir (34A) est monté mobile relativement au moyen d'obturation (37).

12. - Appareil (1) selon la revendication 11 **caractérisé en ce que** le réservoir (34A) comprend un gobelet (34B) muni à sa base d'une bouche formant orifice de déversement (36), le moyen d'obturation (37) comprenant un pointeau (37A) à tête divergente (37B) solidaire du moyen de réception (5) et inséré dans ladite bouche (36A), le gobelet (34B) étant monté à coulissement élastique relativement audit pointeau (37A) entre d'une part une position haute, correspondant à la configuration de rappel et de fermeture, dans laquelle la tête divergente (37B) est en contact avec la bouche (36A) pour fermer ladite bouche (36A), et d'autre part une position basse, dans laquelle la tête divergente (37B) est à distance de la bouche (36A), autorisant ainsi le passage de la matière grasse (35) par la bouche (36A) hors du gobelet (34B).

13. -Appareil (1) selon l'une des revendications 10 à 12 **caractérisé en ce que** le corps principal (2) est muni d'un couvercle (2C) monté mobile entre d'une part une position de fermeture, dans laquelle le couvercle (2C) forme avec le corps principal (2) une enceinte sensiblement fermée et d'autre part une position d'ouverture, autorisant l'introduction des aliments à frire dans le moyen de réception (5), le couvercle (2C) étant relié fonctionnellement au moyen de stockage (34) pour que la position de fermeture du couvercle (2C) corresponde sensiblement à la configuration d'ouverture du moyen de stockage (34).

14. -Appareil (1) selon les revendications 12 et 13 **caractérisé en ce que** le couvercle (2C) est agencé pour exercer, lorsqu'il se trouve en position de fermeture, une poussée sur le réservoir (34A), de façon à faire passer ce dernier de sa position haute à sa position basse.

15. -Appareil (1) selon l'une des revendications 1 à 14 **caractérisé en ce que** le moyen de stockage (34) comporte un moyen de dosage de matière grasse.

16. -Appareil (1) selon l'une des revendications 1 à 15 **caractérisé en ce que** le moyen de stockage (34) est monté sur le moyen de réception (5).

17. -Appareil (1) selon l'une des revendications 1 à 16 **caractérisé en ce que** le moyen de stockage (34) est monté de manière amovible relativement au corps principal (2).

18. -Appareil (1) selon l'une des revendications 1 à 17 **caractérisé en ce que** le moyen de stockage (34) est conçu pour un usage unique exclusivement

19. -Appareil (1) selon l'une des revendications 1 à 18 **caractérisé en ce que** le moyen de stockage (34) est dimensionné pour pouvoir contenir au maximum une quantité de matière grasse (35) sensiblement nécessaire et suffisante pour enduire les aliments contenus par le moyen de réception (5).

20. -Appareil (1) selon l'une des revendications 1 à 19 **caractérisé en ce qu'**il est conçu et dimensionné pour cuire des aliments particulaires, tels que des morceaux de pommes de terre.

21. -Appareil (1) selon l'une des revendications 1 à 20 **caractérisé en ce qu'**il est constitué par une friteuse.

22. - Moyen de stockage (34) de matière grasse (35) pour l'appareil de cuisson (1) conforme à l'une des revendications 1 à 21.

## Claims

1. Domestic appliance (1) for cooking food in the presence of fat, comprising firstly a main body (2) within which there is mounted a reception means (5) designed to accept within it the food to be cooked and secondly a main heating means (24) designed to cook the said food, **characterised in that** it comprises, mounted so as to be fixed to the said main body (2), a means (34) of storing fat (35), distinct from the reception means (5) and functionally connected to the latter in order to be able to transfer into the reception means (5) a predetermined quantity of fat in order to coat the food with fat with a view to carrying out a dry cooking of the said food, the reception means (5) being designed and arranged so as to contain both the food and substantially all the fat (35) liable to come from the storage means (34).

2. Appliance (1) according to claim 1, **characterised in that** the reception means (5) has a receptacle (8) comprising a receptacle bottom, from which side receptacle walls (8B, 8C) rise so as to delimit an internal volume (9) intended to accept the food to be cooked and the fat (35), the said bottom (8A) and side walls (8B, 8C) being substantially solid.

3. Appliance (1) according to one of claims 1 and 2, **characterised in that** it comprises a means (6) of moving the food contained in the reception means (5).

4. Appliance (1) according to claim 3, **characterised in that** the reception means (5) and the moving means (6) are designed to be put in movement with respect to each other, so as to stir the food.

5. Appliance (1) according to claim 4, **characterised in that** the moving means (6) is mounted so as to be able to move in rotation relative to the reception means (5) and functionally connected to a driving means (7) in order to be driven in rotation by the latter.

6. Appliance (1) according to one of claims 1 to 5, **characterised in that** the main heating means (24) is designed to generate a heating flow (25) oriented so as to strike at least part of the food substantially directly.

7. Appliance (1) according to claim 6, **characterised in that** the heating flow (25) is a flow of hot air.

8. Appliance (1) according to one of claims 1 to 7, **characterised in that** the main heating means (24) is mounted within the main body (2).

9. Appliance (1) according to one of claims 1 to 8, **characterised in that** it forms, in operation, a substantially closed cooking chamber provided with a means for the calibrated leakage of steam to the outside.

10. Appliance (1) according to one of claims 1 to 9, **characterised in that** the storage means (34) comprises a reservoir (34A) provided with a pouring orifice (36), which is itself provided with a closure means (37), the said storage means (34) being able to be situated on the one hand in a return and closure configuration, in which the fat (35) is held by the closure means (37) within the reservoir (34A), and on the other hand in an opening configuration, in which the closure means (37) allows the transfer of fat (35), through the pouring orifice (36), out of the reservoir (34A) to the reception means (5).

11. Appliance (1) according to claim 10, **characterised in that** the closure means (37) is mounted fixed in position relative to the main body (2) while the reservoir (34A) is mounted so as to be able to move relative to the closure means (37).

12. Appliance (1) according to claim 11, **characterised in that** the reservoir (34A) comprises a cup (34B) provided at its base with a mouth forming a pouring orifice (36), the closure means (37) comprising a needle (37A) with a divergent head (37B) fixed to the reception means (5) and inserted in the said mouth (36A), the cup (34B) being mounted for resilient sliding relative to the said needle (37A) between firstly a high position, corresponding to the return and closure configuration, in which the divergent head (37B) is in contact with the mouth (36A) in order to close the said mouth (36A), and secondly a low position, in which the divergent head (37B) is at a distance from the mouth (36A), thus allowing passage of the fat (35) through the mouth (36A) out of the cup (34B).

13. Appliance (1) according to one of claims 10 to 12, **characterised in that** the main body (2) is provided with a lid (2C) mounted so as to be able to move between firstly a closure position in which the lid (2C) forms with the main body (2) a substantially closed chamber and certainly an opening position allowing the introduction of the food to be fried in the reception means (5), the lid (2C) being functionally connected to the storage means (34) so that the closure position of the lid (2C) corresponds substantially to the opening configuration of the storage means (34).

14. Appliance (1) according to claims 12 and 13, **characterised in that** the lid (2C) is arranged so as to exert, when it is in the closure position, a thrust on the reservoir (34A), so as to make the latter pass from its high position to its low position.

15. Appliance (1) according to one of claims 1 to 14, **characterised in that** the storage means (34) comprises a means of apportioning fat.

16. Appliance (1) according to one of claims 1 to 15, **characterised in that** the storage means (34) is mounted in the reception means (5).

17. Appliance (1) according to one of claims 1 to 16, **characterised in that** the storage means (34) is mounted removably relative to the main body (2).

18. Appliance (1) according to one of claims 1 to 17, **characterised in that** the storage means (34) is designed solely for single usage.

19. Appliance (1) according to one of claims 1 to 18, **characterised in that** the storage means (34) is sized so as to be able to contain at a maximum a quantity of fat (35) substantially necessary and sufficient for coating the food contained by the reception means (5).

20. Appliance (1) according to one of claims 1 to 19, **characterised in that** it is designed and sized so as to cook particulate food, such as pieces of potato.

21. Appliance (1) according to one of claims 1 to 20, **characterised in that** it is formed by a fryer.

22. Means (34) of storing fat (35) for the cooking appliance (1) according to one of claims 1 to 21.

## Patentansprüche

1. - Haushaltsvorrichtung (1) zum Garen von Nahrungsmitteln in Anwesenheit von Fett, umfassend einerseits einen Hauptkörper (2), in dessen Inneren ein Aufnahmemittel (5) montiert ist, das dazu eingerichtet ist, in seinem Inneren die Nahrungsmittel zum Garen aufzunehmen und andererseits ein Hauptheizmittel (24), das dazu eingerichtet ist, die Nahrungsmittel zu garen, **dadurch gekennzeichnet, dass** sie, fest mit dem Hauptköper (2) verbunden, ein Aufbewahrungsmittel (34) des Fettes (35) umfasst, das vom Aufnahmemittel (5) verschieden ist und funktionell mit letzterem verbunden ist, um in das Aufnahmemittel (5) eine vorbestimmte Menge von Fett übertragen zu können, um die Lebensmittel mit Fett zu beschichten, um eine trockene Garung der Lebensmittel durchzuführen, wobei das Aufnahmemittel (5) dazu eingerichtet und angeordnet ist, um gleichzeitig die Nahrungsmittel und im Wesentlichen das gesamte Fett (35), das aus dem Aufbewahrungsmittel (34) stammen kann, zu enthalten.

2. - Vorrichtung (1) nach Anspruch 1, **dadurch gekennzeichnet, dass** das Aufnahmemittel (5) einen Behälter (8) umfasst, der einen Behälterboden aufweist, von dem aus sich seitliche Behälterwände (8B und 8C) erheben, um ein inneres Volumen (9) abzugrenzen, das dazu dient, die Nahrungsmittel zum Garen und das Fett (35) aufzunehmen, wobei der Boden (8A) und die seitlichen Wände (8B, 8C) im Wesentlichen eben sind.

3. - Vorrichtung (1) nach einem der Ansprüche 1 und 2, **dadurch gekennzeichnet, dass** sie ein Mittel zum Umrühren (6) der Nahrungsmittel umfasst, die im Aufnahmemittel (5) enthalten sind.

4. - Vorrichtung (1) nach Anspruch 3, **dadurch gekennzeichnet, dass** das Aufnahmemittel (5) und das Mittel zum Umrühren (6) dazu eingerichtet sind, in Bezug zueinander in Bewegung gesetzt zu werden, um die Nahrungsmittel umzurühren.

5. - Vorrichtung (1) nach Anspruch 4, **dadurch gekennzeichnet, dass** das Mittel zum Umrühren (6) einerseits beweglich zur Drehung bezüglich des Aufnahmemittels (5) montiert ist, und andererseits funktionell mit einem Motormittel (7) verbunden isL, um durch letzteres in Rotation versetzt zu werden.

6. - Vorrichtung (1) nach einem der Ansprüche 1 bis 5, **dadurch gekennzeichnet, dass** das Hauptheizmittel (24) dazu eingerichtet ist, einen Heizstrom (25) zu erzeugen, der ausgerichtet ist, um mindestens auf einen Teil der Nahrungsmittel im Wesentlichen direkt zu treffen.

7. - Vorrichtung (7) nach Anspruch 6, **dadurch gekennzeichnet, dass** der Heizstrom (25) ein Heißluftstrom ist.

8. - Vorrichtung (1) nach einem der Ansprüche 1 bis 7, **dadurch gekennzeichnet, dass** das Hauptheizmittel (24) im Inneren des Hauptkörpers (2) montiert ist.

9. - Vorrichtung (1) nach einem der Ansprüche 1 bis 8, **dadurch gekennzeichnet, dass** sie in Betrieb einen im Wesentlichen geschlossenen Garraum bildet, der mit einem Mittel zum geregelten Austritt von Dampf in den Außenraum ausgestattet ist.

10. - Vorrichtung (1) nach einem der Ansprüche 1 bis 9, **dadurch gekennzeichnet, dass** das Aufbewahrungsmittel (34) einen Behälter (34A) umfasst, der mit einer Ausgießöffnung (36) versehen ist, die ihrerseits mit einem Verschlussmittel (37) versehen ist, wobei das Aufbewahrungsmittel (34) dazu geeignet ist, sich einerseits in einer Konfiguration der Rückstellung und des Verschlusses zu befinden, in der das Fett (35) durch das Verschlussmittel (37) im Inneren des Behälters (34A) gehalten wird, und andererseits in einer Konfiguration der Öffnung, in der das Verschlussmittel (37) die Übertragung des Fettes (35) durch die Ausgießöffnung (36) aus dem Behälter (34A) in das Aufnahmemittel (5) zulässt.

11. - Vorrichtung (1) nach Anspruch 10, **dadurch gekennzeichnet, dass** das Verschlussmittel (37) fest in einer Position bezüglich des Hauptkörpers (2) montiert ist, während der Behälter (34A) beweglich bezüglich des Verschlussmittels (37) montiert ist.

12. - Vorrichtung (1) nach Anspruch 11, **dadurch gekennzeichnet, dass** der Behälter (34A) einen Becher (34B) umfasst, der an seinem Fuβ mit einer Mündung ausgestattet ist, die eine Ausgießöffnung (36) bildet, wobei das Verschlussmittel (37) ein Nadelventil (37A) mit einem sich erweiternden Kopf (37B) umfasst, der mit dem Aufnahmemittel (b) fest verbunden und in die Mündung (36A) eingeführt ist, wobei der Becher (34B) elastisch gleitbar bezüglich des Nadelventils (37A) zwischen einerseits einer oberen Position, die der Konfiguration der Rückstellung und des Verschlusses entspricht, in der der sich erweiternde Kopf (37B) mit der Mündung (36A) in Kontakt ist, um die Mündung (36A) zu schließen, und andererseits einer unteren Position montiert ist, in der der sich erweiternde Kopf (37B) von der Mündung (36A) entfernt ist und so den Durchgang des Fettes (35) durch die Mündung (36A) aus dem Becher (34B) zulässt.

13. - Vorrichtung (1) nach einem der Ansprüche 10 bis 12, **dadurch gekennzeichnet, dass** der Hauptkörper (2) mit einem Deckel (2C) versehen ist, der beweglich zwischen einerseits einer Position des Verschlusses, in der der Deckel (2C) mit dem Hauptkörper (2) einen Raum bildet, der im Wesentlichen geschlossen ist, und andererseits einer Position der Öffnung montiert isL, die die Einführung der zu bratenden Nahrungsmittel in das Aufnahmemittel (5) zulässt, wobei der Deckel (2C) funktionell miL dem Aufbewahrungsmittel (34) verbunden ist, damit die Position des Verschlusses des Deckels (2C) im Wesentlichen der Konfiguration der Öffnung des Aufbewahrungsmittel (34) entspricht.

14. - Vorrichtung (1) nach den Ansprüchen 12 und 13, **dadurch gekennzeichnet, dass** der Deckel (2C) so angeordnet ist, dass er, wenn er sich in der Position des Verschlusses befindet, auf den Behälter (34A) einen Druck ausübt, um letzteren von seiner oberen Position in seine untere Position zu bringen.

15. - Vorrichtung (1) nach einem der Ansprüche 1 bis 14, **dadurch gekennzeichnet, dass** das Aufbewahrungsmittel (34) ein Mittel zur Dosierung des Fettes umfasst.

16. - Vorrichtung (1) nach einem der Ansprüche 1 bis 15, **dadurch gekennzeichnet, dass** das Aufbewahrungsmittel (34) auf dem Aufnahmemittel (5) montiert ist.

17. - Vorrichtung (1) nach einem der Ansprüche 1 bis 16, **dadurch gekennzeichnet, dass** das Aufbewahrungsmittel (34) bezüglich des Hauptkörpers (2) abnehmbar montiert ist.

18. - Vorrichtung (1) nach einem der Ansprüche 1 bis 17, **dadurch gekennzeichnet, dass** das Aufbewahrungsmittel (34) ausschließlich für eine einzige Verwendung eingerichtet ist.

19. - Vorrichtung (1) nach einem der Ansprüche 1 bis 18, **dadurch gekennzeichnet, dass** das Aufbewahrungsmittel (34) so dimensioniert ist, dass es höchstens eine Menge Fett (35) enthalten kann, die im Wesentlichen notwendig und ausreichend ist, um die Nahrungsmittel, die im Aufnahmemittel (5) enthalten sind, mit Fett zu beschichten.

20. - Vorrichtung (1) nach einem der Ansprüche 1 bis 19, **dadurch gekennzeichnet, dass** sie so eingerichtet und dimensioniert ist, um bestimmte Nahrungsmittel wie z.B. Kartoffelstücke zu garen.

21. - Vorrichtung (1) nach einem der Ansprüche 1 bis 2.0, **dadurch gekennzeichnet, dass** sie aus einer Friteuse besteht.

22. - Aufbewahrungsmittel (34) für Fett (35) für die Garvorrichtung (1) nach einem der Ansprüche 1 bis 21.
